(19)

Europäisches Patentamt
European Patent Office
Office européen des brevets

(11) **EP 4 556 446 A1**

(12) **EUROPEAN PATENT APPLICATION**

(43) Date of publication:
**21.05.2025 Bulletin 2025/21**

(21) Application number: **24210215.0**

(22) Date of filing: **31.10.2024**

(51) International Patent Classification (IPC):
*C01G 53/50* (2025.01)    *H01M 10/052* (2010.01)
*H01M 4/1391* (2010.01)    *H01M 4/525* (2010.01)
*H01M 4/131* (2010.01)    *H01M 4/36* (2006.01)
*H01M 4/505* (2010.01)    *H01M 10/0525* (2010.01)

(52) Cooperative Patent Classification (CPC):
**H01M 4/1391; C01G 53/50; H01M 4/131;
H01M 4/366; H01M 4/505; H01M 4/525;
H01M 10/052; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.10.2023 KR 20230148103**

(71) Applicant: **SAMSUNG SDI CO., LTD.**
**Yongin-si, Gyeonggi-do 17084 (KR)**

(72) Inventors:
• **YOO, Hee Won**
  **16678 Suwon-si (KR)**
• **KWON, Seon Young**
  **16678 Suwon-si (KR)**
• **SON, Jung Woo**
  **16678 Suwon-si (KR)**
• **LEE, Chang Jin**
  **16678 Suwon-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE BATTERIES, METHOD OF PREPARING THE SAME, AND RECHARGEABLE LITHIUM BATTERY INCLUDING THE SAME**

(57)    A positive electrode active material for rechargeable lithium batteries, a method of preparing the same, and a secondary battery including the same are disclosed. The positive electrode active material for rechargeable lithium batteries includes a lithium nickel-based transition metal composite oxide, wherein the lithium nickel-based transition metal composite oxide has a nickel content of 70 mol% or more and a cobalt content of 0 mol% to 0.01 mol% based on the total content of transition metals (or the total content of all metals excluding lithium). The lithium nickel-based transition metal composite oxide includes a lithium nickel-based active material and an aluminium-containing coating layer formed on a surface of the lithium nickel-based active material, and the aluminium-containing coating layer has an aluminium content of 10% to 35% as measured by EDS.

FIG. 5

EP 4 556 446 A1

**Description**

**BACKGROUND**

**1. Field**

The present disclosure relates to a positive electrode active material for rechargeable lithium batteries, a method of preparing the same, and a rechargeable lithium battery including the same.

**2. Description of the Related Art**

In recent years, demand for high energy density and high capacity secondary batteries has grown rapidly with the rapid spread of electronic devices using batteries (e.g., battery-operated electronic devices), such as mobile phones, notebook computers, and electric vehicles. Thus, various research and development efforts have been actively pursued to improve performance of rechargeable lithium batteries.

A rechargeable lithium battery includes a positive electrode and a negative electrode, each containing an active material allowing (e.g., capable of) intercalation and deintercalation of lithium ions, and an electrolyte. The rechargeable lithium battery produces electricity through oxidation and reduction reactions during the intercalation/deintercalation of lithium ions in the positive electrode and the negative electrode.

Various positive electrode active materials have been examined to realize (e.g., manufacture) rechargeable lithium batteries. In particular, lithium nickel oxides, lithium nickel manganese cobalt composite oxides, lithium nickel cobalt aluminium composite oxides, and lithium cobalt oxides may be used as positive electrode active materials. There is a need for development of novel positive electrode active materials capable of realizing high capacity and high energy density while securing (e.g., ensuring) a long lifespan.

**SUMMARY**

Aspects according to one or more embodiments of the present disclosure are directed toward a positive electrode active material for rechargeable lithium batteries, which has a cobalt content (e.g., amount) of 0 mol% to 0.01 mol% based on the total content of transition metals (or the total content of all metals excluding lithium) and can improve lifespan while realizing (e.g., achieving) high capacity, and a method of preparing the same.

An aspect according to one or more embodiments of the present disclosure is directed toward a rechargeable lithium battery including the positive electrode active material for rechargeable lithium batteries.

According to one or more embodiments of the present disclosure, a positive electrode active material for rechargeable lithium batteries includes a lithium nickel-based transition metal composite oxide, wherein the lithium nickel-based transition metal composite oxide has a nickel content of 70 mol% or more and a cobalt content of 0 mol% to 0.01 mol% based on the total content of transition metals (or the total content of all metals excluding lithium), the lithium nickel-based transition metal composite oxide including a lithium nickel-based active material and an aluminium-containing coating layer formed on a surface of the lithium nickel-based active material, the aluminium-containing coating layer having an aluminium content of 10% to 35% as measured by energy dispersive X-ray spectroscopy (EDS). That is, according to one or more embodiments of the present disclosure, a positive electrode active material for rechargeable lithium batteries includes a lithium nickel-based transition metal composite oxide, wherein the lithium nickel-based transition metal composite oxide includes a lithium nickel-based active material and an aluminium-containing coating layer formed on a surface of the lithium nickel-based active material, in the lithium nickel-based transition metal composite oxide, an amount of nickel is 70 mol% or more and an amount of cobalt is 0 mol% to 0.01 mol%, each based on a total molar amount of all transition metals (or a total molar amount of all metals excluding lithium) in the lithium nickel-based transition metal composite oxide, and an amount of aluminium in the coating layer is 10% to 35% based on a total amount of all elements in the aluminium-containing coating layer as measured by EDS.

According to one or more embodiments of the present disclosure, a method of preparing a positive electrode active material for rechargeable lithium batteries includes: preparing a preliminary positive electrode active material by wet coating a surface of a lithium nickel-based active material with an aluminium-containing source in a first solution containing a lithium nickel-based active material having a cobalt content of 0 mol% to 0.01 mol%, an aluminium source, and a solvent; and preparing a final positive electrode active material through heat treatment of the preliminary positive electrode active material, wherein the aluminium source is present in an amount of less than 2 mol% in the first solution based on the total content of transition metals in the lithium nickel-based active material and heat treatment is performed at a temperature of greater than 700 °C to 750 °C. That is, according to one or more embodiments of the present disclosure, a method of preparing a positive electrode active material for rechargeable lithium batteries includes wet coating a surface of a lithium nickel-based active material having a cobalt content of 0 mol% to 0.01 mol% with an aluminium source in a first solution to prepare a preliminary positive electrode active material, the first solution comprising the lithium nickel-based active material, the aluminium source, and a solvent; and conducting a heat treatment of the preliminary positive electrode active material at a temperature of greater than 700 °C to 750 °C to prepare the positive electrode active material, wherein aluminium of the aluminium source is present in an amount of less than 2 mol% in the first solution based on a total molar amount of all transition metals in the lithium nickel-based active material.

According to one or more embodiments of the present disclosure, a rechargeable lithium battery includes: a positive electrode including the positive electrode active material for rechargeable lithium batteries; a negative electrode; and an electrolyte.

At least some of the above and other features of the invention are set out in the claims.

Embodiments of the present disclosure provide a positive electrode active material for rechargeable lithium batteries and a rechargeable lithium battery including the positive electrode active material, which can realize (e.g., achieve) high capacity and high energy density, and has good lifespan characteristics and safety features while suppressing side reactions.

**BRIEF DESCRIPTION OF THE DRAWINGS**

FIG. 1 is a schematic illustration of a cylindrical battery according to some embodiments.

FIG. 2 is a schematic illustration of a prismatic battery according to some embodiments.

FIG. 3 is a schematic illustration of a pouch-type or kind battery according to some embodiments.

FIG. 4 is a schematic illustration of a pouch-type or kind battery according to some embodiments.

FIG. 5 is a graph depicting the aluminium content based on the total content of nickel, manganese and aluminium on an uppermost surface of a positive electrode active material, as measured by EDS, in Examples and Comparative Examples.

FIG. 6 is a graph depicting formation capacity of rechargeable lithium batteries of Examples and Comparative Examples according to the number of cycles, in which ■ is Example 1, • is Example 2, ▲ is Comparative Example 1, and ♦ is Comparative Example 2.

FIG. 7 is a graph depicting capacity of rechargeable lithium batteries prepared in Examples and Comparative Examples according to the number of cycles in evaluation of high temperature lifespan at 45 °C, in which ■ is Example 1, • is Example 2, * is Example 3, ▲ is Comparative Example 1, and ♦ is Comparative Example 2.

FIG. 8 is a graph depicting an outgassing amount in rechargeable lithium batteries prepared in Examples and Comparative Examples.

**DETAILED DESCRIPTION**

Hereinafter, example embodiments of the present disclosure will be described in more detail with reference to the accompanying drawings. However, it should be understood that the following embodiments are provided by way of illustration and the present disclosure is not limited thereto and is defined only by the appended claims and equivalents thereof.

If (e.g., when) an arbitrary element is referred to as being disposed (or located or positioned) "above" (or "below") or "on" (or "under") a component, it may refer to that the arbitrary element is placed in contact with the upper (or lower) surface of the component and may also refer to that another component may be interposed between the component and the arbitrary element disposed (or located or positioned) on (or under) the component.

Throughout the specification, unless specified otherwise, each element may be singular or plural. In addition, throughout the specification, if (e.g., when) "A and/or B" is stated, it refers to A, B, or A and B, unless specified otherwise.

As used herein, "combinations thereof" may refer to mixtures, stacks, composites, copolymers, alloys, blends, and/or reaction products of components.

Unless otherwise defined herein, the term "particle diameter" may refer to an average particle diameter. In addition, the average particle diameter refers to an average particle diameter (D50) that is a particle diameter corresponding to 50% by volume in a volume cumulative distribution of corresponding particles. The average particle diameter may be measured by any suitable method (e.g., known in the art), for example, a particle size analyzer, a transmission electron microscope image or a scanning electron microscope image. In one or more embodiments, the average particle diameter (D50) may be measured by counting the number of particles in each particle diameter range using a device employing a dynamic light-scattering method to analyze data, followed by calculating the average particle diameter (D50) based on the analyzed data. In one or more embodiments, the average particle diameter (D50) may be measured by laser diffraction. For example, in measurement by laser diffraction, the target particles are dispersed in a dispersant, introduced into a commercially available laser diffraction particle analyzer (for example, Microtrac MT 3000), and irradiated with ultrasound waves of about 28 kHz at a power of 60 W, followed by calculating the average particle size (D50) corresponding to 50% by volume (vol%) in the cumulative volume distribution of the particles in the measurement device.

Herein, "Energy Dispersive Spectrometer (EDS)" may be a value measured at an acceleration voltage of 2.5 kV to 3.5 kV under conditions that a specimen has a reaction depth of 100 $\mu$m to 150 $\mu$m.

As used herein, to represent a specific numerical range, "X to Y" refers to a value greater than or equal to X and less than or equal to Y (X$\leq$ and $\leq$ Y).

**Positive electrode active material**

A positive electrode active material includes a lithium nickel-based transition metal composite oxide. The lithium nickel-based transition metal composite oxide has a cobalt content (e.g., amount) of 0 mol% to 0.01 mol% based on the total content (100 mol%) of transition metals (or the total content of all metals excluding lithium). That is, cobalt is not included or is included at an amount of not more than 0.01 mol% based on 100 mol% of all transition metals (including nickel and any other transitional metals) in the lithium nickel-based transition metal composite oxide. Cobalt has an important influence on lifespan and stability of the positive electrode active material. The lithium nickel-based transition metal composite oxide can improve lifespan and stability of the positive electrode active material despite having the cobalt content of 0 mol% to 0.01 mol%. For example, the lithium nickel-based transition metal composite oxide may have a cobalt content of 0 mol%, 0.001 mol%, 0.002 mol%, 0.003 mol%, 0.004 mol%, 0.005 mol%, 0.006 mol%, 0.007 mol%, 0.008 mol%, 0.009 mol%, or 0.01 mol%. For example, the lithium nickel-based transition metal composite oxide may have a cobalt content of 0 mol%. That is, the lithium nickel-based transition metal composite oxide may not include cobalt.

The lithium nickel-based transition metal composite oxide has a nickel content (e.g., amount) of 70 mol% or more based on the total content (100 mol%) of transition metals (or the total content of all metals excluding lithium). Within this range, the positive electrode active material can exhibit improved capacity characteristics. For example, the lithium nickel-based transition metal composite oxide may have a nickel content of 70 mol% to 99 mol%, 70 mol% to 90 mol%, 70 mol% to 85 mol%, or 70 mol% to 80 mol%. For example, the lithium nickel-based transition metal composite oxide may have a nickel content of 70 mol%, 71 mol%, 72 mol%, 73 mol%, 74 mol%, 75 mol%, 76 mol%, 77 mol%, 78 mol%, 79 mol%, 80 mol%, 81 mol%, 82 mol%, 83 mol%, 84 mol%, 85 mol%, 86 mol%, 87 mol%, 88 mol%, 89 mol%, 90 mol%, 91 mol%, 92 mol%, 93 mol%, 94 mol%, 95 mol%, 96 mol%, 97 mol%, 98 mol%, or 99 mol%.

According to one embodiment, the lithium nickel-based transition metal composite oxide may be a lithium, nickel, manganese and aluminium-based transition metal composite oxide, which has a nickel content of 70 mol% or more based on the total content (100 mol%) of nickel, manganese, and aluminium (e.g., the total content of transition metals). Within this range, the positive electrode active material can exhibit improved capacity characteristics. For example, the nickel content may be from 70 mol% to 99 mol%, from 70 mol% to 90 mol%, from 70 mol% to 85 mol%, or from 70 mol% to 80 mol%. For example, the lithium nickel-based transition metal composite oxide may have a nickel content of 70 mol%, 71 mol%, 72 mol%, 73 mol%, 74 mol%, 75 mol%, 76 mol%, 77 mol%, 78 mol%, 79 mol%, 80 mol%, 81 mol%, 82 mol%, 83 mol%, 84 mol%, 85 mol%, 86 mol%, 87 mol%, 88 mol%, 89 mol%, 90 mol%, 91 mol%, 92 mol%, 93 mol%, 94 mol%, 95 mol%, 96 mol%, 97 mol%, 98 mol%, or 99 mol%.

According to one embodiment, the lithium nickel-based transition metal composite oxide may be a lithium, nickel, manganese and aluminium-based transition metal composite oxide, which has a manganese content (e.g., amount) of 10 mol% or more based on the total content (100 mol%) of nickel, manganese, and aluminium. Within this range, the positive electrode active material can exhibit improved capacity characteristics. For example, the manganese content may be from 10 mol% to 30 mol%, from 15 mol% to 30 mol%, or from 20 mol% to 30 mol%. For example, the lithium nickel-based transition metal composite oxide may have a manganese content of 10 mol%, 11 mol%, 12 mol%, 13 mol%, 14 mol%, 15 mol%, 16 mol%, 17 mol%, 18 mol%, 19 mol%, 20 mol%, 21 mol%, 22 mol%, 23 mol%, 24 mol%, 25 mol%, 26 mol%, 27 mol%, 28 mol%, 29 mol%, or 30 mol%.

According to one embodiment, the lithium nickel-based transition metal composite oxide may be a lithium, nickel, manganese and aluminium-based transition metal composite oxide, which has an aluminium content (e.g., amount) of less than 4 mol% based on the total content (100 mol%) of nickel, manganese, and aluminium. That is, aluminium may be included at a positive amount (greater than 0 mol%) and less than 4 mol% based on the total content (100 mol%) of nickel, manganese, and aluminium. Within this range, the positive electrode active material can easily achieve improvement in lifespan. For example, the aluminium content may be from 1 mol% to less than 4 mol%, from 1 mol% to 3 mol%, or from 2 mol% to 3 mol%.

Herein, the "nickel content", "manganese content", and "aluminium content" may be measured by a suitable method (e.g., known in the art), for example, by an inductively coupled plasma (ICP) method.

The positive electrode active material, for example, the lithium nickel-based transition metal composite oxide, includes a lithium nickel-based active material and an aluminium-containing coating layer formed on a surface of the lithium nickel-based active material, wherein the aluminium-containing coating layer has an aluminium content (e.g., amount) of 10% to 35% based on a total amount of all elements of the aluminium-containing coating layer, as measured by EDS.

Herein, "aluminium-containing coating layer" may refer to the entire area or layer present from the uppermost surface of the positive electrode active material to the uppermost surface of the lithium nickel-based active material. For example, the aluminium-containing coating layer may refer to a layer present on the outermost surface of the lithium nickel-based active material. The lithium nickel-based active material has a substantially uniform composition, which is different from the composition of the aluminium-containing coating layer, for example, the aluminium content (or amount, e.g., in mol% or wt%) is greater in the aluminium-containing coating layer than in the lithium nickel-based active material. The lithium nickel-based transition metal composite oxide refers to the lithium nickel-based active material and the aluminium-containing coating layer as a whole.

Herein, "aluminium content in the aluminium-containing coating layer" may be calculated by EDS on the positive electrode active material. EDS facilitates (e.g., allows) calculation of the content of a particular element among total elements contained on the surface of the positive electrode active material, in which "%" may be on a molar basis. That is, the elemental composition of the aluminium-containing coating layer, including the concentration of aluminium can be calculated using EDS.

According to one embodiment, the aluminium-containing coating layer includes or consists of nickel, manganese, and aluminium, and the aluminium content may refer to a ratio of the aluminium content to the total content of nickel, manganese and aluminium in the aluminium-containing coating layer.

If (e.g., when) the aluminium content of the aluminium-containing coating layer is less than 10%, the amount of outgassing may be increased and/or high temperature lifespan may be deteriorated if (e.g., when) the positive electrode active material is left at a high temperature. If (e.g., when) the aluminium content of the aluminium-containing coating layer is greater than 35%, surface resistance may increase excessively, causing poor initial capacity characteristics, deterioration in capacity characteristics upon repeated formation, and poor high temperature lifespan. In one embodiment, the aluminium-containing coating layer may have an aluminium content of 15% to 35%, or 20% to 35%, as measured by EDS. For example, the aluminium-containing coating layer may have an aluminium content of 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, or 35%.

According to one embodiment, the aluminium-containing coating layer may have a nickel content (e.g., amount) of 30% to 70% based on a total amount of elements of the aluminium-containing coating layer, as measured by EDS. Within this range, the positive electrode active material can easily achieve improvement in capacity characteristics. For example, the aluminium-containing coating layer may have a nickel content of 35% to 65%, 35% to 60%, 40% to 60%, or 40% to 60%, as measured by EDS. For example, the aluminium-containing coating layer may have a nickel content of 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, or 70%.

According to one embodiment, the aluminium-containing coating layer may have a manganese content (e.g., amount) of 10% to 50% based on a total amount of elements of the aluminium-containing coating layer. Within this range, the positive electrode active material can easily achieve improvement in capacity characteristics. For example, the aluminium-containing coating layer may have a manganese content of 10% to 40%, 10% to 30%, or 10% to 30%, as measured by EDS. For example, the aluminium-containing coating layer may have a manganese content of 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, or 50%.

According to one embodiment, in the aluminium-containing coating layer, the ratio of the aluminium content to the nickel content (Al:Ni) may be from 0.2 to 0.8 (i.e., 0.2:1 to 0.8:1). Within this range, the positive electrode active material can easily achieve improvement in capacity characteristics and lifespan. For example, the ratio of the aluminium content to the nickel content may be from 0.3 to 0.8, 0.35 to 0.8, or 0.4 to 0.8. For example, the ratio of the aluminium content to the nickel content may be 0.2, 0.25, 0.3, 0.35, 0.4, 0.45, 0.5, 0.55, 0.6, 0.65, 0.7, 0.75, or 0.8.

Here, the nickel content and the manganese content in the aluminium-containing coating layer may be measured by EDS.

According to one embodiment, the lithium nickel-based transition metal composite oxide may have a ratio of 5 to 20 (i.e., 5:1 to 20:1), as calculated according to Equation 1. Within this range, the positive electrode active material having a cobalt content of 0 mol% to 0.01 mol% can easily achieve improvement in lifespan:

Equation 1

$$Ratio = B/A$$

where A is the aluminium content of the lithium nickel-based transition metal composite oxide (e.g., a total amount of aluminium in both the lithium nickel-based active material and the aluminium-containing coating layer), and

B is the aluminium content of the aluminium-containing coating layer of the lithium nickel-based transition metal composite oxide. That is, B is only the aluminium content in the aluminium-containing coating layer.

In Equation 1, A is the aluminium content (e.g., in mol%) based on the total content of transition metal elements (or the total content of all metals excluding lithium) in the lithium nickel-based transition metal composite oxide, and may be calculated by, for example, the ICP method.

In Equation 1, B is the aluminium content based on the total content of transition metal elements in the aluminium-containing coating layer of the lithium nickel-based transition metal composite oxide, and may be calculated by, for example, an EDS method.

Equation 1 may be a criterion for determining whether the lithium-nickel transition metal composite oxide having a nickel content of 70 mol% or more and a cobalt content of 0 mol% to 0.01 mol% based on the total content of transition metals (or the total content of all metals excluding lithium) has good lifespan and capacity characteristics without outgassing in the battery. For example, Equation 1 may be a criterion for determining whether the lithium nickel-based transition metal composite oxide having a nickel content of 70 mol% or more, a cobalt content of 0 mol% to 0.01 mol%, and an aluminium content of less than 4 mol%, each based on the total content of transition metals (or the total content of all metals excluding lithium), may have good lifespan and capacity characteristics without outgassing in the battery.

The lithium nickel-based transition metal composite oxide satisfying Equation 1 may be prepared by a method of preparing a lithium nickel-based transition metal composite oxide described below. The preparation method of the lithium nickel-based transition metal composite oxide will be described in more detail below.

For example, the ratio of Equation 1 may be from 5 to 18, 6 to 17, or 7 to 17. For example, the ratio of Equation 1 may be 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or 20. Within these ranges, the positive electrode active material can have good properties in terms of capacity characteristics, lifespan and suppression of outgassing, and can be easily prepared. For example, the ratio of Equation 1 may be 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, or 20.

According to one embodiment, the lithium nickel-based active material may include secondary particles prepared through agglomeration of a plurality of primary particles. The secondary particles may be agglomerates of the primary particles agglomerated by physical and/or chemical methods.

The primary particles may have a particle size of 0.05 $\mu$m to 0.5 $\mu$m, for example, a particle size of 0.08 $\mu$m to 0.4 $\mu$m, or 0.1 $\mu$m to 0.3 $\mu$m (100 nm to 300 nm). Within these ranges, the positive electrode active material can be easily prepared. For example, the primary particles may have a particle size of 0.05 $\mu$m, 0.1 $\mu$m, 0.15 $\mu$m, 0.2 $\mu$m, 0.25 $\mu$m, 0.3 $\mu$m, 0.35 $\mu$m, 0.4 $\mu$m, 0.45 $\mu$m, or 0.5 $\mu$m.

The secondary particles may have a particle size of 10 $\mu$m to 20 $\mu$m, for example, 14 $\mu$m to 20 $\mu$m, 15 $\mu$m to 20 $\mu$m, or 16 $\mu$m to 20 $\mu$m. Within this range, the positive electrode active material can be easily prepared. For example, the secondary particles may have a particle size of 10 $\mu$m, 10.5 $\mu$m, 11 $\mu$m, 11.5 $\mu$m, 12 $\mu$m, 12.5 $\mu$m, 13 $\mu$m, 13.5 $\mu$m, 14 $\mu$m, 14.5 $\mu$m, 15 $\mu$m, 15.5 $\mu$m, 16 $\mu$m, 16.5 $\mu$m, 17 $\mu$m, 17.5 $\mu$m, 18 $\mu$m, 18.5 $\mu$m, 19 $\mu$m, 19.5 $\mu$m, or 20 $\mu$m.

Herein, "size" refers to an average diameter of active material particles if (e.g., when) the active material particles have a spherical shape. If the active material particles are not spherical, "size" refers to the maximum value among major axis lengths that can be obtained from cross-sections of the particles. The average diameter can be measured using a particle size distribution (PSD) instrument or by SEM. The major axis lengths can be measured by SEM or the like.

The lithium nickel-based active material may include a lithium nickel-based active material having a cobalt content of 0 mol% to 0.01 mol%.

For example, the lithium nickel-based active material may be a compound represented by Formula 1:

$$\text{Formula 1} \qquad \text{Li}_{a1}\text{Ni}_{x1}\text{M}^1_{y1}\text{M}^2_{1-x1-y1}\text{O}_2,$$

where $0.9 \leq a1 \leq 1.8$, $0.3 \leq x1 \leq 1$, and $0 \leq y1 \leq 0.7$, and $M^1$ and $M^2$ are each independently selected from among Al, B, Ce, Cr, F, Mg, Mn, Mo, Nb, P, S, Si, Sr, Ti, V, W, Zr, Ca, Ba, Ti, Zr, Zn, Fe, a rare-earth element and combinations thereof.

In some embodiments, in Formula 1, $0.3 \leq x1 \leq 1$ and $0 \leq y1 \leq 0.7$; $0.4 \leq x1 \leq 1$ and $0 \leq y1 \leq 0.6$; $0.5 \leq x1 \leq 1$ and $0 \leq y1 \leq 0.5$; $0.6 \leq x1 \leq 1$ and $0 \leq y1 \leq 0.4$; $0.7 \leq x1 \leq 1$ and $0 \leq y1 \leq 0.3$; $0.8 \leq x1 \leq 1$ and $0 \leq y1 \leq 0.2$; or $0.9 \leq x1 \leq 1$ and $0 \leq y1 \leq 0.1$.

Next, the method of preparing a positive electrode active material will be described.

The method of preparing a positive electrode active material includes: preparing a preliminary positive electrode active material by wet coating a surface of a lithium nickel-based active material with an aluminium-containing source in a first solution containing a lithium nickel-based active material having a cobalt content of 0 mol% to 0.01 mol%, an aluminium source, and a solvent; and preparing a final positive electrode active material through heat treatment of the preliminary positive electrode active material, wherein the aluminium source is present in an amount of less than 2 mol% in the first solution based on the total content of transition metals in the lithium nickel-based active material and heat treatment is performed at a temperature of greater than 700 °C to 750 °C.

The method can facilitate the preparation of the positive electrode active material satisfying the aluminium content in the aluminium-containing coating layer, whereby the positive electrode active material can achieve improvement in capacity and lifespan characteristics while suppressing outgassing.

(1) A lithium nickel-based active material having a cobalt content of 0 mol% to 0.01 mol% is prepared.

The lithium nickel-based active material may be prepared by, for example, mixing a nickel-based active material precursor and a lithium source in a predetermined molar ratio and subjecting the mixture to primary heat treatment.

The nickel-based active material precursor may be a compound represented by, for example, Formula 2:

$$\text{Formula 2} \qquad \text{Ni}_{1-y-z}\text{M}^1_y\text{M}^2_z(\text{OH})_2,$$

where $0<y<0.5$, $0.8\leq1-y-z<1$, and $0\leq z<0.5$, and
$M^1$ and $M^2$ are each independently Al, B, Ce, Cr, F, Mg, Mn, Mo, Nb, P, S, Si, Sr, Ti, V, W, Zr, Ca, Ba, Ti, Zr, Zn, Fe, a rare-earth element or a combination thereof.

The nickel-based active material precursor may be prepared by coprecipitation of a nickel precursor and a precursor of another transition metal. For example, the nickel-based active material precursor may be a hydroxide or oxide including nickel and other metals.

The nickel-based active material precursor may be prepared by mixing a nickel precursor, a manganese precursor, and an aluminium precursor in a first solvent. The nickel precursor, the manganese precursor, and the aluminium precursor may be any suitable substance available in the art, and the content of each of the nickel precursor, the manganese precursor, and the aluminium precursor is stoichiometrically controlled to obtain the compound of Formula 1.

The first solvent may be water, ethanol, propanol, butanol, or the like. In addition, the first solvent is present in an amount of 100 to 2,000 parts by weight relative to 100 parts by weight of all of the nickel precursor, the manganese precursor, and the aluminium precursor.

According to one embodiment, the nickel-based active material precursor may be secondary particles prepared through agglomeration of a plurality of primary particles.

The lithium source may include, for example, lithium hydroxide, lithium fluoride, lithium carbonate, lithium sulfate, lithium nitrate, or mixtures thereof. The mixing ratio of the lithium source and the nickel-based active material precursor may be stoichiometrically controlled, for example, to prepare the nickel-based active material represented by Formula 1.

Mixing of the lithium source and the nickel-based active material precursor may be dry mixing and may be performed using a mixer or the like. Dry mixing may be performed by milling. Although milling conditions are not particularly limited, milling may be performed to allow little or no deformation, such as refinement of the precursor used as a start material. A mixture (e.g., required mixture for producing the nickel-based active material represented by Formula 1) may be obtained by milling the lithium source with the precursor at 300 to 3,000 rpm. If the inner temperature of a mixer rises above 30 °C during the milling process, a cooling process may be performed to maintain the interior of the mixer at room temperature (25 °C).

The mixture is treated with a primary heat treatment performed in air or under an oxygen atmosphere. The primary heat treatment may be performed, for example, at 600 °C to 900 °C, for example, at 650 °C to 900 °C to thereby produce the lithium nickel-based active material (e.g., lithium nickel-based transition metal composite oxide).

Upon mixing of the nickel-based active material precursor with the lithium source, a second solvent may be further used. Similar to the first solvent described above, the second solvent may include water, ethanol, butanol, propanol, or the like, and may be present in an amount of 100 to 2,000 parts by weight relative to 100 parts by weight of the lithium source.

To the mixture containing the nickel-based active material precursor and the lithium source, a complexing agent and a pH regulator may be added and mixed therewith. The complexing agent may include, for example, aqueous ammonia as an ammonium ion source and the pH regulator may include, for example, a sodium hydroxide solution and/or the like. The pH of the resulting product is adjusted in the range of 11 to 13 by adjusting the content of the pH regulator.

(2) A preliminary positive electrode active material is prepared by wet coating the surface of the lithium nickel-based active material with an aluminium-containing source in a first solution containing the lithium nickel-based active material, an aluminium source, and a solvent. Here, the aluminium source is present in an amount of less than 2 mol% in the first solution based on the total content of transition metals in the lithium nickel-based active material.

The aluminium source is present in an amount of less than 2 mol% based on the total content of the transition metals in the lithium nickel-based active material. If the content of the aluminium source exceeds 2 mol%, it is difficult for the aluminium-containing coating layer to have the aforementioned aluminium content, causing poor capacity characteristics. For example, the aluminium source may be present in an amount of 0.1 mol% to less than 2 mol%, or 0.5 mol% to 1 mol%.

According to one embodiment, the aluminium source may include a suitable material (e.g., known to those skilled in the art) to be used to coat aluminium through wet coating. Wet coating allows uniform coating on the surface of the lithium nickel-based active material with aluminium. For example, the aluminium source may include at least one of aluminium sulfate, aluminium nitrate, aluminium carbonate, or aluminium hydroxide.

According to one embodiment, the solvent may be any suitable solvent (e.g., known to those skilled in the art) to be used to coat aluminium through wet coating. For example, the solvent may include at least one of distilled water, ethanol, isopropanol, or n-propanol.

Wet coating may be performed by stirring the first solution at a temperature of 5 °C to 30 °C for 5 minutes to 2 hours.

(3) A final positive electrode active material is prepared through heat treatment of the preliminary positive electrode active material, in which heat treatment is performed at a temperature of greater than 700 °C to 750 °C.

Heat treatment is performed at a temperature of greater than 700 °C to 750 °C. Heat treatment temperature at a temperature of 700 °C or less can cause deterioration in initial capacity, formation capacity after repeated cycles, and lifespan at high temperature. Heat treatment at a temperature of greater than 750 °C can result in large outgassing amount and poor lifespan at high temperature.

According to one embodiment, the heat treatment temperature may be lower than the primary heat treatment temperature by 95 °C or more, for example, by 95 °C to 150 °C. Within these ranges, the positive electrode active material can be easily prepared.

## Rechargeable lithium battery

According to another embodiment, a rechargeable lithium battery includes a positive electrode including the positive electrode active material for rechargeable lithium batteries; a negative electrode; and an electrolyte.

The positive electrode for rechargeable lithium batteries may include a current collector and a positive electrode active material layer formed on the current collector. The positive electrode active material layer may include the above described positive electrode active material and may further include a binder and/or a conductive material.

In one embodiment, the positive electrode may further include an additive capable of acting as a sacrificial positive electrode.

The positive electrode active material may be present in an amount of 90 wt% to 99.5 wt% based on 100 wt% of the positive electrode active material layer and each of the binder and the conductive material may be present in an amount of 0.5 wt% to 5 wt% based on 100 wt% of the positive electrode active material layer.

The positive electrode active material includes a positive electrode active material according to one or more embodiments of the present disclosure. The description of the positive electrode active material according to embodiments is the same as described above.

In addition to the positive electrode active material according to embodiments of the disclosure, the positive electrode active material may further include a different positive electrode active material for rechargeable lithium batteries. For example, the positive electrode active material for rechargeable lithium batteries may include at least one composite oxide of lithium and a metal selected from among cobalt, manganese, nickel and combinations thereof.

The composite oxide may be a lithium transition metal composite oxide. For example, the composite oxide may include a lithium nickel oxide, a lithium cobalt oxide, a lithium manganese oxide, a lithium iron phosphate compound, or a combination thereof.

By way of example, the composite oxide may be a compound represented by any one of the following formulas:$Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); and $Li_{(3-f)}Fe_2(PO_4)_3$ ($0 \leq f \leq 2$); $Li_aFePO_4$ ($0.90 \leq a \leq 1.8$).

In the above formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

In one embodiment, the positive electrode active material may be a high nickel-content positive electrode active material containing 80 mol% or more, 85 mol% or more, 90 mol% or more, 91 mol% or more, or 94 mol% to 99 mol% of nickel based on 100 mol% of metals excluding lithium in the lithium transition metal composite oxide. The high nickel-content positive electrode active material can realize high capacity and thus can be applied to high capacity/high density rechargeable lithium batteries.

The binder serves to attach positive electrode active material particles to each other and also attaching the positive electrode active material to the current collector. The binder may include, for example, polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and/or the like, without being limited thereto.

The conductive material serves to impart conductivity to the electrodes and may be any suitable electrically conductive material that does not cause chemical change in cells under construction. The conductive material may include, for example, carbon materials, such as natural graphite, artificial graphite, carbon black, acetylene black, Ketjen black, carbon fiber, carbon nanofibers, carbon nanotubes, and/or the like; metal-based materials in the form of metal powders or metal fibers containing copper, nickel, aluminium, silver, and/or the like; conductive polymers, such as polyphenylene derivatives and/or the like; and mixtures thereof.

The current collector may be Al, without being limited thereto.

The negative electrode for rechargeable lithium batteries includes a current collector and a negative electrode active material layer disposed on the current collector. The negative electrode active material layer includes a negative electrode active material and may further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

The negative electrode active material includes a material allowing reversible intercalation/deintercalation of lithium ions, lithium metal, a lithium metal alloy, a material capable of allowing lithium to be doped to and de-doped therefrom, or a transition metal oxide.

The material allowing reversible intercalation/deintercalation of lithium ions may include a carbon-based negative electrode active material, for example, crystalline carbon, amorphous carbon, or a combination thereof. The crystalline carbon may include, for example, graphite, such as natural graphite or artificial graphite, in amorphous (i.e. non-shaped), plate, flake, spherical, or fibrous form, and the amorphous carbon may include, for example, soft carbon, hard carbon, mesoporous pitch carbides, calcined coke, and/or the like.

As the lithium metal alloy, an alloy of lithium and a metal selected from among Na, K, Rb, Cs, Fr, Be, Mg, Ca, Sr, Si, Sb, Pb, In, Zn, Ba, Ra, Ge, Al and Sn may be used.

The material capable of allowing lithium to be doped to and de-doped therefrom may be an Si-based negative electrode material or an Sn-based negative electrode material. The Si-based negative electrode material may be silicon, a silicon-carbon composite, $SiO_x$ ($0<x\leq2$), Si-Q alloys (where Q is selected from among alkali metals, alkali-earth metals, Group XIII elements, Group XIV elements (excluding Si), Group XV elements, Group XVI elements, transition metals, rare-earth elements, and combinations thereof), or combinations thereof. The Sn-based negative electrode material may be Sn, $SnO_x$ ($0 < x \leq 2$, e.g., $SnO_2$), an Sn alloy, or a combination thereof.

The silicon-carbon composite may be a composite of silicon and amorphous carbon. According to one embodiment, the silicon-carbon composite may be prepared in the form of silicon particles having an amorphous carbon coating formed on the surface thereof. For example, the silicon-carbon composite may include secondary particles (cores) composed of primary silicon particles and an amorphous carbon coating layer (shell) formed on the surface of the secondary particles. The amorphous carbon may also be placed between the primary silicon particles such that, for example, the primary silicon particles are coated with the amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer formed on the core.

The Si-based negative electrode material or the Sn-based negative electrode material may be used in combination with the carbon-based negative electrode material.

The binder serves to attach the negative electrode active material particles to each other and also attaching the negative electrode material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from the group consisting of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

If (e.g., when) the aqueous binder is used as the negative electrode binder, a cellulose-based compound capable of imparting viscosity may be further included. The cellulose-based compound may be a mixture of carboxymethylcellulose, hydroxypropyl methylcellulose, methylcellulose, or alkali metal salts thereof. The alkali metal may be Na, K, or Li.

The dry binder may be a fibrous polymeric material and may include, for example, polytetrafluoroethylene, polyvinylidene fluoride, a polyvinylidene fluoride-hexafluoropropylene copolymer, polyethylene oxide, or a combination thereof.

The conductive material serves to impart conductivity to the electrodes and may be any suitable electrically conductive material that does not cause chemical change in cells under construction. For example, the conductive material may include, for example, carbon materials, such as natural graphite, artificial graphite, carbon black, acetylene black, Ketjen black, carbon fibers, carbon nanofibers, carbon nanotubes, and/or the like; metal-based materials in the form of metal powders or metal fibers containing copper, nickel, aluminium, silver, and/or the like; conductive polymers, such as polyphenylene derivatives and/or the like; or mixtures thereof.

The negative electrode current collector may be selected from copper foil, nickel foil, stainless steel foil, titanium foil, nickel foam, copper foam, a conductive metal-coated polymer base, and combinations thereof.

The electrolyte for rechargeable lithium batteries includes a non-aqueous organic solvent and a lithium salt.

The non-aqueous organic solvent acts as a medium through which ions involved in electrochemical reaction of a cell can move.

The non-aqueous organic solvent may be a carbonate-based solvent, an ester-based solvent, an ether-based solvent, a ketone-based solvent, an alcohol-based solvent, a non-amphoteric solvent, or a combination thereof.

The carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like.

The ester-based solvents may include methyl acetate, ethyl acetate, n-propyl acetate, dimethyl acetate, methyl propionate, ethyl propionate, decanolide, mevalonolactone, valerolactone, caprolactone, and/or the like.

The ether-based solvents may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone and/or the like. The alcohol-based solvents may include ethyl alcohol, isopropyl alcohol, and/or the like, and non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and/or the like; sulfolanes; and/or the like.

The non-aqueous organic solvent may be used alone or as a mixture thereof.

In use of the carbonate-based solvent, a mixture of a cyclic carbonate and a chained carbonate may be used, and the cyclic carbonate and the chained carbonate may be mixed in a volume ratio of 1:1 to 1:9.

The lithium salt is a substance that is soluble in an organic solvent and serves as a source of lithium ions in a battery, enabling the basic operation of a rechargeable lithium battery while facilitating transfer of the lithium ions between the positive electrode and the negative electrode. Examples of the lithium salts may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide (LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethane sulfonate, lithium difluorobis(oxalato)phosphate (LiDFBOP), and lithium bis(oxalato)borate (LiBOB).

Depending on the type or kind of rechargeable lithium battery, a separator may be interposed between the positive electrode and the negative electrode. For such a separator, polyethylene, polypropylene, polyvinylidene fluoride, or at least two layers thereof may be used as well as mixed layers, such as a polyethylene/polypropylene bilayer separator, a polyethylene/polypropylene/polyethylene trilayer separator, a polyethylene/polyethylene/polypropylene trilayer separator, and/or the like.

The separator may include a porous substrate and a coating layer that includes an organic material, an inorganic material, or a combination thereof on one or both surfaces of the porous substrate.

The porous substrate may be a polymer layer formed of a polymer selected from among polyolefins, such as polyethylene polypropylene, and/or the like, polyesters, such as polyethylene terephthalate, polybutylene terephthalate, and/or the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, polytetrafluoroethylene (e.g., Teflon), copolymers thereof, or mixtures thereof.

The organic material may include a polyvinylidene fluoride polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiOs$, $BaTiOs$, $Mg(OH)_2$, boehmite, and combinations thereof, without being limited thereto.

The organic material and the inorganic material may be present in a mixed state in one coating layer or may be present in the form of a stack structure of a coating layer including the organic material and a coating layer including the inorganic material.

Rechargeable lithium batteries may be classified into a cylindrical secondary battery, a faceted (e.g., prismatic) secondary battery, a pouch type or kind secondary battery, a coin type secondary battery, and/or the like based on the shapes thereof.

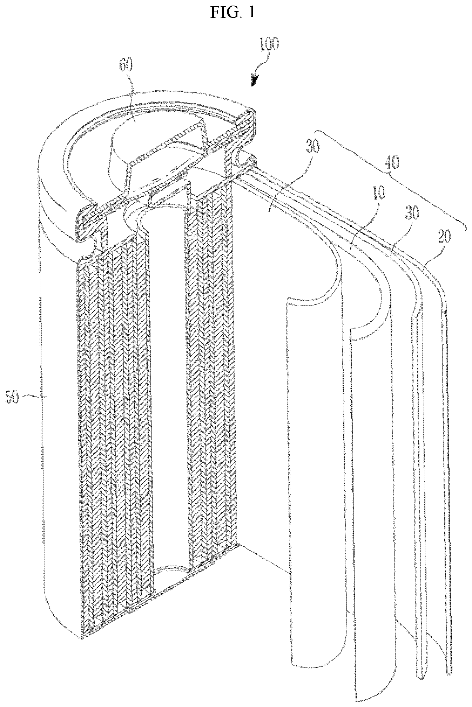

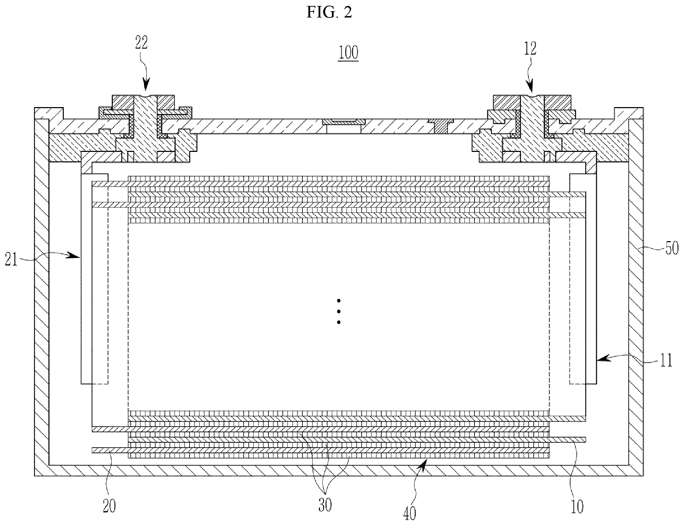

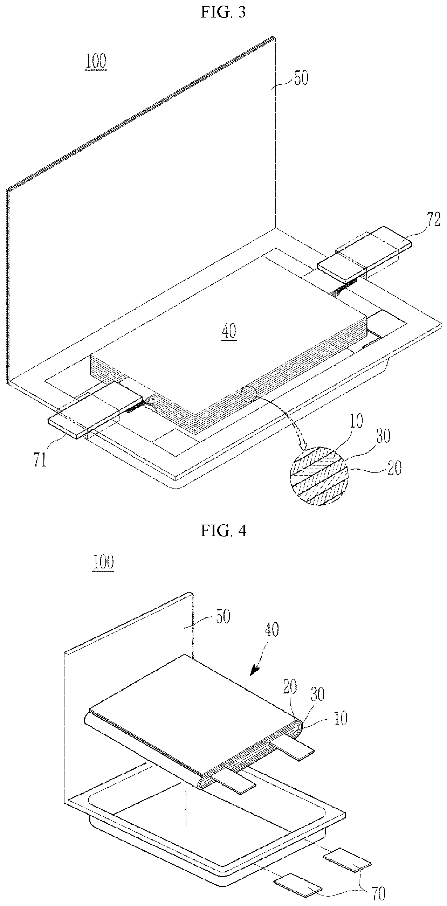

FIG. 1 to FIG. 4 are schematic views of rechargeable lithium batteries according to embodiments of the present disclosure, in which FIG. 1 shows a cylindrical battery, FIG. 2 shows a prismatic battery, and FIG. 3 and FIG. 4 show pouch-type or kind batteries. Referring to FIG. 1 to FIG. 4, a rechargeable lithium battery 100 may include an electrode assembly 40 in which a separator 30 is interposed between a positive electrode 10 and a negative electrode 20, and a case 50 that receives the electrode assembly 40 therein. The positive electrode 10, the negative electrode 20, and the separator 30 may be embedded in an electrolyte. The rechargeable lithium battery 100 may include a sealing member 60 that seals the case 50, as shown in FIG. 1. In addition, as shown in FIG. 2, the rechargeable lithium battery 100 may include a positive electrode lead tab 11, a positive electrode terminal 12, a negative electrode lead tab 21, and a negative electrode terminal 22. Referring to FIG. 3 and FIG. 4, the rechargeable lithium battery 100 may include electrode tabs 70, that is, a positive electrode tab 71 and a negative electrode tab 72, which act as electrical pathways conducting current formed in the electrode assembly 40 to the outside.

Rechargeable lithium batteries according to embodiments of the present disclosure may be applied to automobiles, mobile phones, and/or various other electrical devices, without being limited thereto.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

**Example 1: Preparation of positive electrode active material**

$Al_2(SO_4)_3(H_2O)_{18}$ was used as an aluminium precursor, $NiSO_4(H_2O)_6$ was used as a nickel precursor, and $MnSO_4(H_2O)_6$ was used as a manganese precursor.

The aluminium precursor, $Al_2(SO_4)_3(H_2O)_{18}$, was mixed with NaOH, $NH_4OH$, and water to prepare an aqueous solution of the aluminium precursor.

The nickel precursor, $NiSO_4(H_2O)_6$, and the manganese precursor, $MnSO_4(H_2O)_6$, were mixed with water respectively to prepare an aqueous solution of the nickel precursor and an aqueous solution of the manganese precursor.

With the aqueous solution of the aluminium precursor placed in a reactor, the aqueous solution of the nickel precursor and the aqueous solution of the manganese precursor were dropwise added to the reactor to obtain a reaction mixture, followed by stirring the reaction mixture for 10 to 20 hours. The content of each of the nickel precursor, the manganese precursor and the aluminium precursor in the reaction mixture was stoichiometrically controlled until the molar ratio of nickel, manganese and aluminium reached 75:23:2.

An aqueous solution of sodium hydroxide was added to the reaction mixture to adjust the pH of the reaction mixture to 10 to 12. A resulting product obtained by filtering and washing the resulting precipitates was dried at 100 °C in a vacuum, thereby preparing a nickel manganese aluminium hydroxide powder ($Ni_{0.75}Mn_{0.23}Al_{0.02}(OH)_2$), which is a nickel-manganese precursor doped with aluminium as a nickel-based active material precursor.

After mixing the nickel manganese aluminium hydroxide with lithium hydroxide (LiOH) as a lithium source, the mixture was placed in a furnace and then subjected to primary calcination at 845 °C for 15 hours while supplying $O_2$ to the furnace, followed by drying. The content of each of the nickel manganese aluminium hydroxide and the lithium source was controlled such that the mixing ratio of all of the transition metals to lithium reached 1:1.03 on a molar basis, thereby preparing a lithium nickel-based active material.

As an aluminium source, aluminium sulfate was added to the lithium nickel-based active material (such that the content of aluminium was 1 mol% based on the total content of the transition metals in the lithium nickel-based active material) and wet-coated in distilled water, thereby preparing a preliminary positive electrode active material.

The preliminary positive electrode active material was subjected to secondary calcination at 750 °C for 20 hours, thereby preparing a final nickel-based active material ($LiNi_{0.745}Mn_{0.225}Al_{0.03}O_2$).

**Example 2: Preparation of positive electrode active material**

A final nickel-based active material ($LiNi_{0.745}Mn_{0.225}Al_{0.03}O_2$) was prepared in the same manner as in Example 1 except that secondary calcination was performed at 725 °C for 20 hours.

**Example 3: Preparation of positive electrode active material**

A final nickel-based active material ($LiNi_{0.745}Mn_{0.235}Al_{0.02}O_2$) was prepared in the same manner as in Example 2 except that the content of each of the nickel precursor, the manganese precursor, and the aluminium precursor was stoichiometrically controlled until the mole ratio of nickel, manganese and aluminium reached 75:24:1.

**Comparative Example 1: Preparation of positive electrode active material**

A final nickel-based active material ($LiNi_{0.745}Mn_{0.225}Al_{0.03}O_2$) was prepared in the same manner as in Example 1 except that secondary calcination was performed at 825 °C for 20 hours.

**Comparative Example 2: Preparation of positive electrode active material**

A final nickel-based active material ($LiNi_{0.745}Mn_{0.225}Al_{0.03}O_2$) was prepared in the same manner as in Example 1 except that secondary calcination was performed at 700 °C for 20 hours.

**Comparative Example 3: Preparation of positive electrode active material**

A final nickel-based active material ($LiNi_{0.74}Mn_{0.22}Al_{0.04}O_2$) was prepared in the same manner as in Example 2 except that the content of each of the nickel precursor, the manganese precursor, and the aluminium precursor was stoichiometrically controlled until the mole ratio of nickel, manganese and aluminium reached 75:23:2, and 2 mol% of aluminium was added instead of 1 mol% of aluminium.

Table 1 summarizes the preparation process of the positive electrode active materials in Examples and Comparative Examples.

After measurement of ICP values of the positive electrode active materials prepared in Examples and Comparative Examples, the content (in mol%) ratio of Ni: Mn: Al in transition metal elements (or the total content of all metals excluding lithium) in the positive electrode active material was obtained based on the ICP measurement. Results are shown in Table 1.

Table 1

|  | Ni:Mn:Al ratio in aluminium-doped nickel-manganese precursor (mol%) | Primary calcination Temp. (°C) | Aluminiu m precursor (mol%) | Secondary calcination Temp. (°C) | Ni:Mn:Al ratio in positive electrode active material (mol%) |
|---|---|---|---|---|---|
| Example 1 | 75:23:2 | 845 | 1 | 750 | 74.5:22.5:3 |
| Example 2 | 75:23:2 | 845 | 1 | 725 | 74.5:22.5:3 |
| Example 3 | 75:24:1 | 845 | 1 | 725 | 74.5:23.5:2 |
| Comparati ve Example 1 | 75:23:2 | 845 | 1 | 825 | 74.5:22.5:3 |
| Comparati ve Example 2 | 75:23:2 | 845 | 1 | 700 | 74.5:22.5:3 |
| Comparati ve Example 3 | 75:23:2 | 845 | 2 | 725 | 74:22:4 |

For the positive electrode active materials prepared in Examples and Comparative Examples, the content ratios of nickel, manganese, and aluminium on the uppermost surface of the positive electrode active material were measured at 1000x magnification by energy dispersive X-ray spectroscopy (EDS). The measurements were taken at five different points on the uppermost surface of the positive electrode active material and an average value for each of nickel, manganese, and aluminium was calculated.

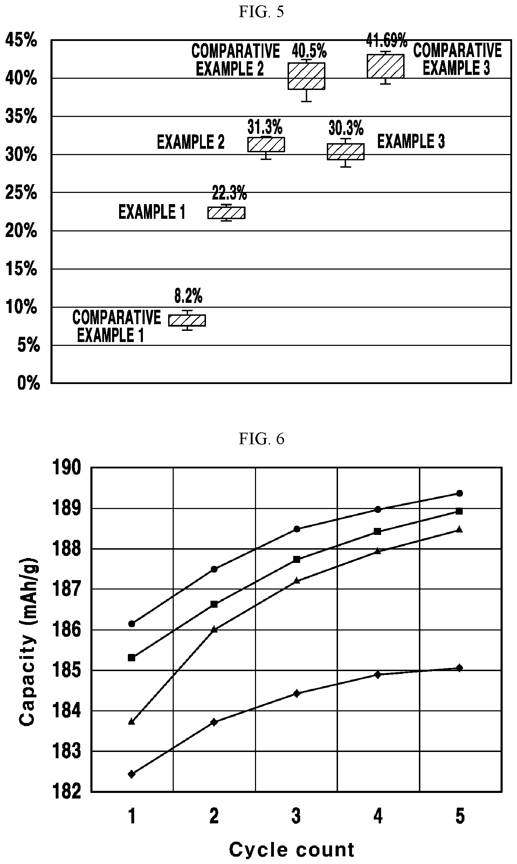

Then, the surface weight value of aluminium was calculated based on the aluminium content and the total sum of nickel, aluminium, and manganese in the positive electrode active material in Table 1, and the aluminium content based on the total sum of nickel, manganese, and aluminium on the uppermost surface of the positive electrode active material. Results are shown in Table 2 and FIG. 5.

Table 2

|  | Average value by EDS (mol%) | | | | Ratio of Al based on total sum of Ni + Mn + Al among metal elements excluding lithium in positive electrode active material (mol%) | Surface weight value |
|---|---|---|---|---|---|---|
|  | Ni | Mn | Al | Al/N i |  |  |
| Example 1 | 51.8 | 25.9 | 22.3 | 0.43 | 3 | 7.4 |
| Example 2 | 45.7 | 23.0 | 31.3 | 0.68 | 3 | 10.4 |

(continued)

| | Average value by EDS (mol%) | | | | Ratio of Al based on total sum of Ni + Mn + Al among metal elements excluding lithium in positive electrode active material (mol%) | Surface weight value |
|---|---|---|---|---|---|---|
| | Ni | Mn | Al | Al/N i | | |
| Example 3 | 46.5 | 23.2 | 30.3 | 0.65 | 2 | 15.2 |
| Comparativ e Example 1 | 63.9 | 27.9 | 8.2 | 0.13 | 3 | 2.7 |
| Comparativ e Example 2 | 39.6 | 19.9 | 40.5 | 1.02 | 3 | 13.5 |
| Comparativ e Example 3 | 39.2 | 19.2 | 41.6 | 1.06 | 4 | 10.4 |

Referring to Table 2 and FIG. 5, it could be seen that the positive electrode active materials of Examples had an aluminium content of 10% to 35% in the aluminium coating layer, as measured by EDS. Conversely, it could be seen that the positive electrode active materials of Comparative Examples 1 to 3 had an aluminium content outside the range of 10% to 35%.

**Preparation of rechargeable lithium batteries**

Active material slurries were prepared by mixing the positive electrode active material prepared in each of Examples and Comparative Examples, a carbon conductor (carbon nanotubes), and a polyvinylidene fluoride (PVDF) binder solution. In the active material slurries, the weight ratio of the positive electrode active material, the conductor, and the binder was 97.7:1.0:1.3. The prepared slurries were coated at a loading level of 27 $mg/cm^2$ on an aluminium current collector having a thickness of 13.5 $\mu$m using a thick film coater, dried at 120 °C for 1 hour or more, and rolled to prepare positive electrodes.

Graphite powder as a negative electrode material and a mixture of styrene butadiene rubber (SBR) and carboxymethyl cellulose (CMC) in a weight ratio of 1:1 were mixed in a weight ratio of 97:3 to prepare negative electrode material slurries.

The prepared negative electrode active material slurries were coated at a loading level of 19.5 $mg/cm^2$ on a copper foil collector having a thickness of 8 $\mu$m. The coated electrode plate was dried at 100 °C for 1 hour or more, and then rolled to prepare negative electrodes having a composite density of 1.5 $g/cm^3$.

Rechargeable lithium batteries with a capacity of 30 mAh were prepared using the positive electrodes and the negative electrodes together with a polyethylene separator (separator, STAR 20, Asahi) and an electrolyte in which 1.15 M $LiPF_6$ was dissolved in a mixed solvent of EC (ethylene carbonate), EMC (ethyl methyl carbonate) and DMC (dimethyl carbonate) (2:4:4 volume ratio).

The following properties were evaluated for the prepared rechargeable lithium batteries and results are shown below.

(1) Initial (1 cycle) formation capacity and efficiency: Initial discharge capacity was measured by charging each of the rechargeable lithium batteries at a constant current of 0.2 C from 2.8 V to an upper limit voltage of 4.4 V at 25 °C, and charging the battery under a constant voltage condition until the current dropped to an end condition of 0.05 C, followed by discharging at 0.2 C to a discharge end voltage of 2.8 V. A ratio of discharge capacity to charge capacity was calculated as efficiency. Results are shown in FIG. 6 and Table 3.

(2) Formation capacity after repeated cycle (5 cycles): Formation capacity was measured after operating charge/-discharge cycles 5 times under the conditions described in (1). Results are shown in FIG. 6 and Table 3. (Formation stage)

(3) High temperature lifespan at 45 °C: A rechargeable lithium battery that had undergone the formation stage was charged at a constant current of 0.5 C from 2.8 V to an upper limit voltage of 4.4 V at 45 °C, and was charged under a constant voltage condition until the current dropped to an end condition of 0.05 C while maintaining 4.4 V. Then, a cycle of discharging the battery at a constant current of 0.5 C until the voltage dropped to 2.8 V upon discharge was repeated 150 times.

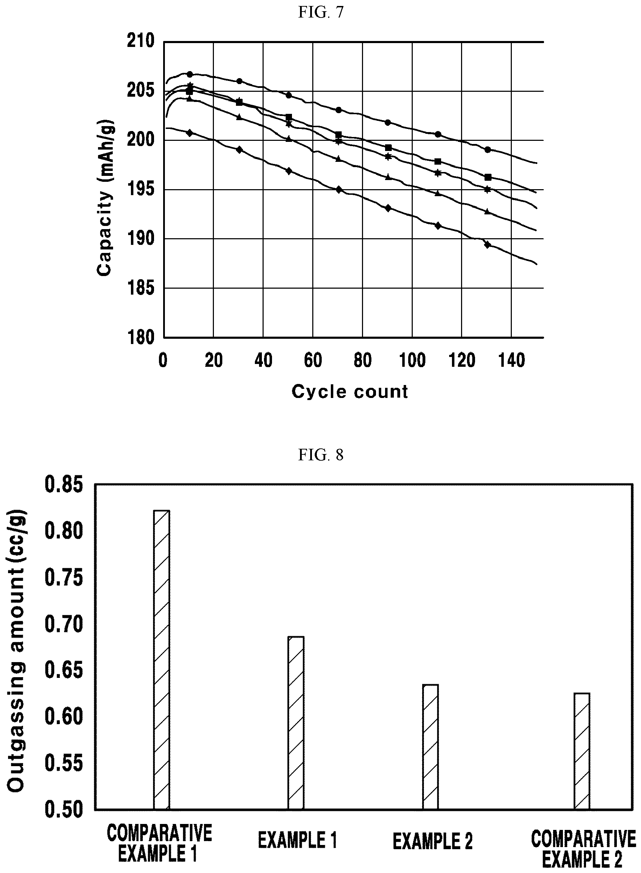

High temperature lifespan was calculated by dividing the discharge capacity of each cycle by the weight of the positive electrode active material. Results are shown in FIG. 7 and Table 3.

(4) Outgassing amount at 90 °C for 4 hours: After evaluation of formation capacity in (1), the rechargeable lithium battery was fully charged to 4.4 V and completely immersed in water at 90 °C to obtain an initial volume V1. Then, the rechargeable lithium battery was left for 4 hours to obtain a volume V2. Volume increase was calculated by subtracting V1 from V2 (V2 - V1). The amount of outgassing per weight of the positive electrode active material was calculated based on the buoyancy and volume increase. Results are shown in FIG. 8 and Table 3.

Table 3

| | Initial formation capacity and efficiency | | | Capacity after 5 cycles | High temperature lifespan | Outgassing amount |
|---|---|---|---|---|---|---|
| | Charge capacity (mAh/g) | Discharge capacity (mAh/g) | Efficiency (%) | (mAh/g) | (%) | (cc/g) |
| Example 1 | 229.5 | 185.2 | 80.7 | 188.9 | 194.9 | 0.703 |
| Example 2 | 230.1 | 186.3 | 81.0 | 189.4 | 197.9 | 0.650 |
| Example 3 | 230.5 | 186.1 | 80.7 | -. | 193.3 | -. |
| Comparative Example 1 | 227.1 | 183.7 | 80.9 | 188.5 | 190.9 | 0.804 |
| Comparative Example 2 | 226.7 | 182.7 | 80.6 | 185.1 | 187.5 | 0.612 |
| Comparative Example 3 | 226.7 | 181.5 | 80.1 | -. | -. | -. |

*In Table 3, "-" indicates no evaluation.

Referring to Table 3, FIG. 6, FIG. 7, and FIG. 8, it could be seen that the positive electrode active materials of Examples suppressed gas-forming side reactions, and had good high temperature lifespan and high capacity.

On the other hand, referring to Table 3, FIG. 6, FIG. 7, and FIG. 8, it could be seen that Comparative Example 1 with an aluminium-containing coating layer having an aluminium content of less than 10% and Comparative Example 2 with an aluminium content of more than 35% measured by EDS both failed to provide all enhanced effects of the above examples.

According to one or more embodiments, a positive electrode active material includes a lithium nickel-based active material and an aluminium-containing coating layer on a surface of the lithium nickel-based active material. The positive electrode active material and the lithium nickel-based active material together forms a lithium nickel-based transition metal composite oxide. In some embodiments, the lithium nickel-based active material is represented by Formula 1. In some embodiments, the positive electrode active material includes no cobalt or includes cobalt at an amount of not more than 0.01 mol%, nickel at an amount of 70 mol% or more, manganese at an amount of 10 mol% or more, and aluminium at an amount of less than 4 mol% (including both the aluminium in the lithium nickel-based active material and the aluminium in the aluminium-containing coating layer). Also, in the aluminium-containing coating layer, an aluminium content is 10% to 35% based on a total amount of elements in the coating layer, as measured by EDS. The aluminium-containing coating layer may further include nickel at an amount of 30% to 70%, and manganese at an amount of 10% to 50%, each based on a total amount of elements of the coating layer, as measured by EDS.

As used herein, the terms "use," "using," and "used" may be considered synonymous with the terms "utilize," "utilizing," and "utilized," respectively. As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Here, unless otherwise defined, the listing of steps, tasks, or acts in a particular order should not necessarily means that the invention or claims require that particular order. That is, the general rule that unless the steps, tasks, or acts of a method (e.g., a method claim) actually recite an order, the steps, tasks, or acts should not be construed to require one.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

Although the present disclosure has been described with reference to some embodiments and drawings, it should be understood that the present disclosure is not limited thereto and various modifications, changes, alterations, and equivalent embodiments can be made by those skilled in the art without departing from the scope of the present disclosure.

## Claims

1. A positive electrode active material for rechargeable lithium batteries, the positive electrode active material comprising a lithium nickel-based transition metal composite oxide,

   the lithium nickel-based transition metal composite oxide comprises a lithium nickel-based active material and an aluminium-containing coating layer formed on a surface of the lithium nickel-based active material,
   wherein in the lithium nickel-based transition metal composite oxide, an amount of nickel is 70 mol% or more and an amount of cobalt is 0 mol% to 0.01 mol%, each based on a total molar amount of all transition metals in the lithium nickel-based transition metal composite oxide, and
   an amount of aluminium in the coating layer is 10% to 35% based on a total amount of all elements in the aluminium-containing coating layer as measured by EDS.

2. The positive electrode active material as claimed in claim 1, wherein in the positive electrode active material, a total amount of aluminium is less than 4 mol%, based on the total molar amount of all transition metals in the lithium nickel-based transition metal composite oxide.

3. The positive electrode active material as claimed in claim 1 or claim 2, wherein in the aluminium-containing coating layer, a ratio of the amount of aluminium to an amount of nickel as measured by EDS is from 0.2:1 to 0.8:1.

4. The positive electrode active material as claimed in any one of claims 1 to 3, wherein the lithium nickel-based transition metal composite oxide has an aluminium content ratio of 5 to 20, as calculated according to Equation 1:

   Equation 1

   $$\text{ratio} = B/A$$

   where A is an amount of aluminium in the lithium nickel-based transition metal composite oxide, and
   B is the amount of aluminium in the aluminium-containing coating layer in the lithium nickel-based transition metal composite oxide.

5. The positive electrode active material as claimed in any one of claims 1 to 4, wherein in the aluminium-containing coating layer, an amount of nickel is 30% to 70% and an amount of manganese is 10% to 50%, each based on the total amount of all elements in the aluminium-containing coating layer as measured by EDS.

6. The positive electrode active material as claimed in any one of claims 1 to 5, wherein the lithium nickel-based active material is represented by Formula 1:

Formula 1 $\quad$ $Li_{a1}Ni_{x1}M^1_{y1}M^2_{1-x1-y1}O_2$,

where $0.9 \leq a1 \leq 1.8$, $0.3 \leq x1 \leq 1$, and $0 \leq y1 \leq 0.7$, and
$M^1$ and $M^2$ are each independently selected from among Al, B, Ce, Cr, F, Mg, Mn, Mo, Nb, P, S, Si, Sr, Ti, V, W, Zr, Ca, Ba, Ti, Zr, Zn, Fe, a rare-earth element and combinations thereof.

7. The positive electrode active material as claimed in any one of claims 1 to 6, wherein the lithium nickel-based active material comprises a secondary particle comprising an agglomeration of a plurality of primary particles.

8. The positive electrode active material as claimed in any one of claims 1 to 7, wherein the lithium nickel-based transition metal composite oxide comprises a lithium, nickel, manganese, and aluminium-based transition metal composite oxide.

9. The positive electrode active material as claimed in claim 8, wherein in the lithium, nickel, manganese and aluminium-based transition metal composite oxide, an amount of nickel is 70 mol% or more based on a total molar amount of nickel, manganese and aluminium.

10. The positive electrode active material as claimed in claim 8 or claim 9, wherein in the lithium, nickel, manganese and aluminium-based transition metal composite oxide, an amount of manganese is 10 mol% or more based on a total molar amount of nickel, manganese and aluminium.

11. The positive electrode active material as claimed in any one of claims 8 to 10, wherein in the lithium, nickel, manganese, and aluminium-based transition metal composite oxide, an amount of aluminium is less than 4 mol% based on a total molar amount of nickel, manganese, and aluminium.

12. The positive electrode active material as claimed in any one of claims 1 to 11, wherein

the lithium nickel-based active material comprises secondary particles comprising an agglomeration of a plurality of primary particles,
the primary particles have an average particle size of 0.05 μm to 0.5 μm, and
the secondary particles have an average particle size of 10 μm to 20 μm.

13. The positive electrode active material as claimed in any one of claims 1 to 12, wherein the lithium nickel-based active material has a cobalt content of 0 mol% to 0.01 mol%.

14. A method of preparing a positive electrode active material for rechargeable lithium batteries, the method comprising:

wet coating a surface of a lithium nickel-based active material having a cobalt content of 0 mol% to 0.01 mol% with an aluminium source in a first solution to prepare a preliminary positive electrode active material, the first solution comprising the lithium nickel-based active material, the aluminium source, and a solvent; and
conducting a heat treatment of the preliminary positive electrode active material at a temperature of greater than 700 °C to 750 °C to prepare the positive electrode active material,
wherein aluminium of the aluminium source is present in an amount of less than 2 mol% in the first solution based on a total molar amount of all transition metals in the lithium nickel-based active material.

15. A rechargeable lithium battery comprising:

a positive electrode comprising the positive electrode active material as claimed in any one of claims 1 to 13;
a negative electrode; and

an electrolyte.

FIG. 1

FIG. 2

FIG. 3

FIG. 4

FIG. 5

FIG. 6

FIG. 7

FIG. 8

## EUROPEAN SEARCH REPORT

Application Number

EP 24 21 0215

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 520 318 A (UNIVERSITY OF SCIENCE AND TECHNOLOGY BEIJING) 20 May 2022 (2022-05-20) | 1,2, 4-11,13, 15 | INV. C01G53/50 H01M10/052 |
| Y | * page 7, paragraphs 2, 4, 5; example 1 * ----- | 12 | H01M4/1391 H01M4/525 |
| E | EP 4 520 726 A1 (SAMSUNG SDI CO LTD [KR]) 12 March 2025 (2025-03-12)   * paragraphs [0074], [0075], [0077], [0082], [0129], [0130] * ----- | 1-3, 6-11, 13-15 | H01M4/131 H01M4/36 H01M4/505 H01M10/0525 |
| Y | CN 115 842 117 A (SUNWODA ELECTRIC VEHICLE CELL CO LTD) 24 March 2023 (2023-03-24) * page 8, paragraph 4 * ----- | 12 | |

TECHNICAL FIELDS
SEARCHED        (IPC)

H01M

The present search report has been drawn up for all claims

| Place of search | Date of completion of the search | Examiner |
|---|---|---|
| The Hague | 31 March 2025 | Forestier, Gilles |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 0215

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | | Publication date | Patent family member(s) | | Publication date |
|---|---|---|---|---|---|
| CN 114520318 | A | 20-05-2022 | NONE | | |
| EP 4520726 | A1 | 12-03-2025 | CN | 119542371 A | 28-02-2025 |
| | | | EP | 4520726 A1 | 12-03-2025 |
| | | | JP | 2025031699 A | 07-03-2025 |
| | | | KR | 20250030329 A | 05-03-2025 |
| | | | US | 2025070136 A1 | 27-02-2025 |
| CN 115842117 | A | 24-03-2023 | NONE | | |

EPO FORM P0459

For more details about this annex : see Official Journal of the European Patent Office, No. 12/82